# EUROPEAN PATENT APPLICATION

(11) **EP 1 797 803 A1**
(43) Date of publication of application: **20.06.2007**
(21) Application number: 06025098.2
(22) Date of filing: 05.12.2006
(51) Int. Cl.: A47J 37/12

(54) **Pump oil fryer**

(30) Priority: 06.12.2005 CN 200520132137 U
(71) Applicant: View Deluxe Company Limited, Kwai Chung, New Territories (HK)
(72) Inventor: Wong, Wai Tung, c/o View Deluxe Comp. Limited, Castle Peak Road Kwai Chung, New Territories (HK)
(74) Representative: Zambardino, Umberto

(57) **Abstract**

A pump-oil fryer, which includes a top-open housing (11); a container (10) with heater (6) and a basket (5) with filter mesh. A pump (9) is used to draw the oil onto the top of basket and spread evenly on the frying food. Then the oil returns to the oil tank again. The heated oil is cycling throughout the frying period. The oil quantity can be largely reduced and the heating time shortened. Moreover, the frying food is not immersed in oil, most of the water content of the food is not vaporized away and the fried food is crisp and juicy.

## Description

### Technical Field

This applications relates to a household use fryer which employs a reduced quantity of oil. The resultant fried food is typically more crisp and juicy. The oil used in frying may be reduced to about 1/6 of that commonly employed for related devices.

### Background

The conventional fryer typically functions to cook food with the food immersed in or floated on oil. The conventional fryer requires a large amount of oil and has three general deficiencies as follows:
1. Large oil requirement and long heating time. However, only small amount of fried food is needed in most families, and it is not economical.
2. The fried food does not have optimum taste because the food is immersed in or floated on oil with the oil temperature usually higher than 100°C.
3. Poor safety. The high temperature oil is susceptible to causing fire or scalding the chef.

### Summary

To overcome the deficiencies of the traditional fryer, the pump-oil fryer cycles the oil and allows oil to drop on the food for frying. This reduces the oil quantity and heating time. The fried food is crisp and juicy because the food is not immersed in oil. Little water in the food is vaporized away.

To attain the above mentioned result, the pump-oil fryer employs a basket for holding food and a container with an oil tank on the bottom. A small amount of oil is poured in the container when frying. A pump draws the heated oil upward and the oil sprays out from an open nozzle.

A deflector plate on the top cover changes the oil direction and makes it drop on the cover of the basket. A filter mesh on both the cover and the bottom of the basket disperse oil or allow oil return back to the container.

### Brief Description of the Drawings

Figure 1 is a sectional view, partly in schematic, of a pump-oil fryer; and
Figure 2 is a block diagram illustrating safety features for the pump-oil fryer.

### Detailed Description Of The Preferred Embodiment

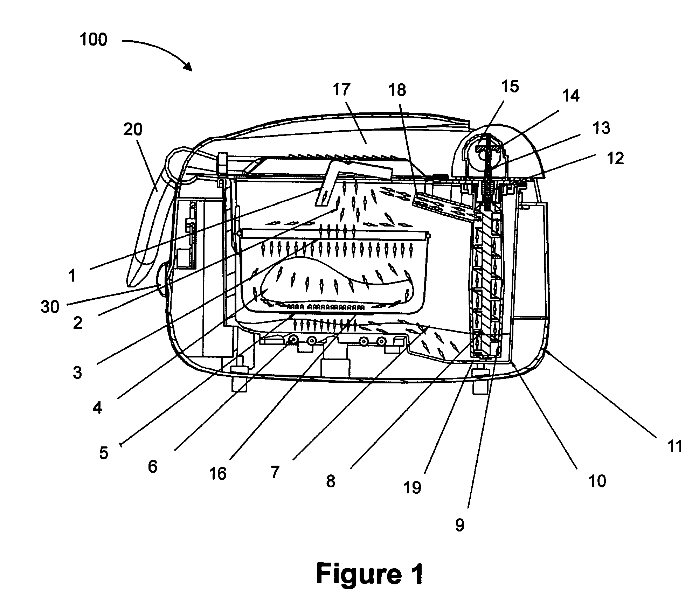

Fig.1 shows the main components of this pump-oil fryer 100, which includes a plastic housing 11 with a top-open top cover 17 and a deflector plate 1 located on the bottom of the top cover. The shape of the deflector plate 1 shown in the figure has an angled form which may be described as an "L" or a "V". A metal container 10 has a heater 6 on its bottom and an oil tank 19 on one end. A screw-pump 8 draws oil upward. The pump is located on the rear of the container 10. A basket 5 with a filter mesh 16 on the bottom is used to hold food 4 (representationally illustrated). The basket 5 is placed on the container 10 when frying. An oil disperser plate 3 disperses oil substantially uniformly over the food. The oil disperser plate 3 is placed on the basket during frying.

When frying, oil is poured into the container 10. The path of the oil is schematically represented by oil drop drawings with arrows. The oil is heated and flows to the oil tank 19. The oil is then pumped upward and discharges from a nozzle 18 and sprays against the deflector plate 1. The oil then drops on the oil disperser plate 3 and is then spread evenly on the food. The oil then returns back to the bottom of the container, where it is heated again. With this way, oil can be cycled continuously during the frying period. Thus, only small amount of oil is needed.

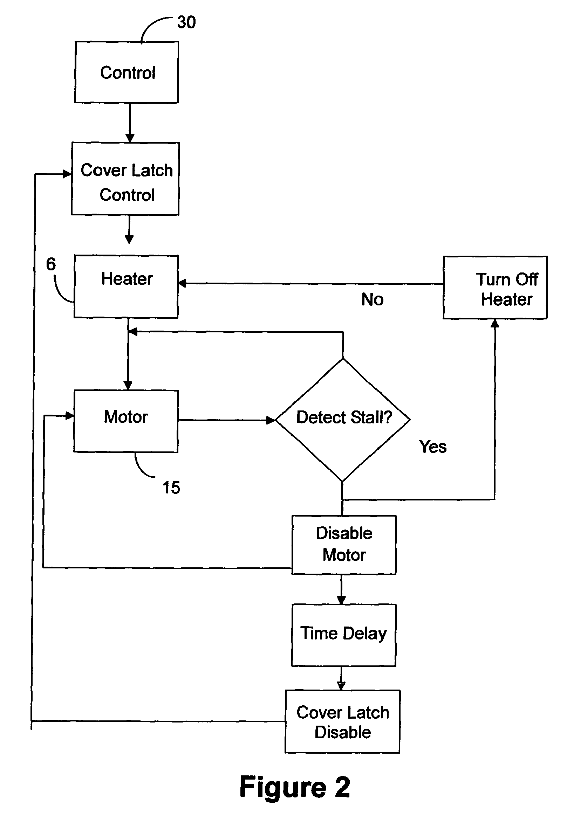

With additional reference to Figure 2, the fryer employs various safety mechanisms. For the operational safety of the above appliance 100, safety devices and features may be employed are as follows:
A. Location of the pump motor 15 and its stalled mechanism 12: motor 15 is located on the top of the fryer to avoid spraying oil. If the motor is stalled as sensed by the detector 12, the heater 6 will stop working, and the motor 15 stop rotating.
B. Screw pump 8 is used to draw oil, instead of vacuum pump.a counter-blade is used on the top of the pump to avoid overflow of oil and make it only flow from the nozzle 18.
C. The top cover 17 of the fryer is latched by latch 20 and can only be opened after a delay time period, for example, 1 minute, when the motor is stopped.

The top cover 17 can only be opened after 1 minute when the pump 8 is stopped in one embodiment. For example, when the pump is stopped, the solenoid for locking the top cover latch 20 loses power, and the top cover 17 can be opened.

An advantage of the fryer is the use of less oil to fry more crisp and juicy food. In one embodiment the oil used in this fryer is reduced to 0.3-0.5 liter, while a common corresponding fryer usually needs 1.8-2.5 liters.

## Claims

1. A pump-oil fryer comprising:
a housing having a cover which opens;
a container disposed in said housing and having a heater;
a basket with a filter mesh disposed in said housing above said container,
a pump which pumps oil from said container to an upper location; and
a spreader sub-assembly which spreads oil pumped to said upper location on food disposed in said basket;
wherein oil disposed in said container is heated by said heater and continuously cycled by said pump and spread to fry food in the basket without the food being immersed in said oil.

2. The fryer of claim 1 wherein said pump has a screw configuration.

3. The fryer of claim 1 wherein the pump is driven by a motor disposed above the pump.

4. The fryer of claim 1 wherein said heater is turned off when said motor stops.

5. The fryer of claim 1 wherein said spreader system further comprises an oil deflector plate above said basket which deflects oil discharged from said pump across a top of said basket.

6. The fryer of claim 5 wherein said oil is substantially uniformly spread across the top of said basket.

7. The fryer of claim 5 wherein said deflector plate has a substantially V-shaped configuration.

8. The fryer of claim 1 wherein said mesh is disposed at the bottom of the basket and oil drips through the mesh to the container.

9. The fryer of claim 3 further comprising an electrically controlled cover which is latched in the closed position and said cover remains latched for a pre-established time after said motor is stopped.

10. The fryer of claim 9 wherein said time is approximately one minute.
